# EUROPÄISCHE PATENTANMELDUNG

(11) **EP 1 645 401 A2**
(43) Veröffentlichungstag der Anmeldung: **12.04.2006**
(21) Anmeldenummer: 05020048.4
(22) Anmeldetag: 15.09.2005
(51) Int. Cl.: B29C 65/18, B65B 51/30, B29C 65/74, B65B 9/20

(54) **Verfahren und Vorrichtung zum Positionieren einer Schweissbacke**

(30) Priorität: 09.10.2004 DE 102004049375
(71) Anmelder: ROVEMA VERPACKUNGSMASCHINEN GMBH, 35463 Fernwald (DE)
(72) Erfinder: Kammler, Roman, Dr., 67547 Worms (DE); Baur, Walter, Dr., 63584 Gründau (DE)

(57) **Zusammenfassung**

Um aufeinander liegende Folienlagen (23, 24) mit verbesserter Siegelnahtqualität miteinander verschweißen zu können, wird innerhalb einer Siegeldauer zwischen Siegelflächen (30) von gegeneinander bewegten Schweißbacken (30) oder zwischen einer Siegelfläche und einem Widerstand ein Abstand (a) von einer Steuereinrichtung (27) eines als elektromagnetischer Linearantrieb (Linearmotor) ausgeführten Antriebs (8) vorgegeben, wobei der Wert für den Abstand (a) stets kleiner oder gleich dem Wert für die Stärke (d) für die beiden aufeinander liegenden Folienlagen (23, 24) ist.

## Beschreibung

Die vorgeschlagene Neuerung betrifft den Verpackungsmaschinenbau und dort ein Verfahren und eine Vorrichtung zum Positionieren einer Schweißbacke während eines Schweißvorganges, insbesondere einer Schweißbacke einer Quersiegelstation einer vertikalen Schlauchbeutelmaschine.

Aus der DE 44 25 207 A ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacken in Richtung des geraden Abschnittes mit gleicher Geschwindigkeit weiterbewegt, um den Folienschlauch mittels über die Siegelflächen der Schweißbacken in den Folienschlauch eingebrachter Wärme bei einem ausgeübten Druck in einer Siegelebene unter einer Siegelkraft innerhalb einer Siegelzeit zu verschweißen. Dabei ist ein Antrieb dazu vorgesehen, die Schweißbacke in einer Normalrichtung zu einer Oberfläche des Widerstandes hin zu bewegen, um derart den Schweißvorgang ortsfest oder entlang eines effektiven Siegelweges innerhalb der Siegelzeit durchzuführen.

Bei einer anderen vertikalen Schlauchbeutelmaschine ist lediglich ein Antrieb dazu vorgesehen, zwei nur in horizontaler Richtung aufeinander zu und voneinander weg bewegbare Schweißbacken entlang jeweils einer linienförmigen Bahn zu bewegen, um einen Folienschlauch jeweils bei einem Folienstillstand quer zu seiner Transportrichtung zu verschweißen.

Die bekannten Verfahren und Vorrichtungen haben den Nachteil, dass die Schweißbacke im allgemeinen die miteinander zu verschweißenden Folielagen zu stark zusammendrückt, sodass aufgeschmolzener Kunststoff aus der Siegelnaht weg gedrückt wird, was zu einer Schwächung der Siegelnaht führt. Dies liegt daran, dass die Schweißbacke in folge einer vorgegebenen Siegelkraft, nur durch den mechanischen Widerstand der Folienlagen selbst, gegen diese gedrückt wird. Die Siegelkraft bzw. der sich aus dem Betrag der Siegelfläche und der Siegelkraft ergebende Siegeldruck wird durch eine Vorspannung einer Federkraft eingestellt. Diese durch einen Federweg (sogenannter Überzug) vorgewählte Kraft wird während einer Siegelzeit durchlaufen. Dabei wird die Siegelkraft schlagartig erzeugt, mit zunehmender Federstauchung und anschließender Federentspannung über einen maximalen Wert gebracht, und dann schlagartig durch eine Trennung der Schweißbacken weggenommen. Der funktionelle Zusammenhang zwischen der Siegelkraft und der innerhalb eines Intervalls für eine Siegelzeit verlaufenden Zeit ist technisch vorgegeben. Er kann nur durch eine Montage bzw. ein manuelles Einstellen geändert werden. Und auch nach einer derartigen Änderung bleibt das erwähnte Siegelkraftprofil an sich bestehen, es erreicht lediglich andere Werte.

Ein für eine schonende und ideale Folienverschweißung optimale Führung der Schweißbacke, bei der die Schweißbacke nicht zu sehr gegen den Folienschlauch bzw. in eine Folienlage hinein gesetzt wird, um diese nicht zu schädigen, ist dabei nicht möglich. Zudem ist bei der bekannten Vorrichtung am Ende der Siegelzeit die Siegelkraft relativ hoch, so dass es dann in Folge der zu stark in die Folienlagen einwirkenden Schweißbacke zu dem ungewünschten Herausdrücken von fließfähigem Kunststoff aus der Siegelnaht kommen kann.

Dieser Nachteil wird auch bei Verpackungsmaschinenaggregaten gesehen, bei denen ein Schweißvorgang nur mittels einer einzigen Schweißbacke ausgeführt wird, indem die Schweißbacke gegen einen zu verschweißenden Folienschlauch oder eine umgelegte Folienbahn bewegt wird, um die Folie gegen einen ortsfesten Widerstand zu drücken und derart zu verschweißen.

Der Erfindung liegt die Aufgabe zu Grunde, ein Verfahren gemäß dem Oberbegriff des Anspruchs 1 derart weiterzubilden, dass die erwähnten Nachteile beseitigt werden können.

Gelöst ist die Aufgabe gemäß dem kennzeichnenden Teil des Anspruchs 1. Danach wird ein Abstand zwischen der Siegelfläche und dem Widerstand bzw. zwischen den beiden Siegelflächen der Schweißbacken während des Schweißvorganges von einer Steuereinrichtung des Antriebs vorgegeben, und der Wert für den Abstand ist stets kleiner oder gleich dem Wert für die Stärke für die beiden aufeinander liegenden Folienlagen.

Das vorgeschlagene Verfahren hat den Vorteil, dass während einer Siegelzeit, d. h. zu Beginn, während und gegen Ende der Siegelzeit, die eine Siegeldauer beschreibt, der Abstand stets so gewählt wird, dass eine optimale Verschweißung eines Folienschlauches mittels Quer- oder Längsnähten bzw. eine optimale Verschweißung einer horizontal ausgerichteten, geknickten Folienbahn erfolgt. Dabei spielt es keine Rolle, ob zwei Schweißbacken gegeneinander oder eine einzige Schweißbacke gegen einen mechanischen Widerstand bewegt wird. Auch ist es unerheblich, ob ein die Normalkomponente und damit die Siegelkraft erzeugender Antrieb nur eine Schweißbacke oder gleichzeitig zwei gegeneinander bewegbare Schweißbacken antreibt. Der Abstand wird durch den Betrieb des Antriebs zeitgenau und ortsgenau vorgegeben, so dass die Siegelfläche einer Schweißbacke die Folienlagen nicht zu sehr zusammendrückt und folglich aufgeschmolzenen Kunststoff nicht zu sehr aus der Siegelnaht drücken kann.

Der zeitliche Verlauf des Abstandes innerhalb der Dauer einer Siegelzeit kann an Hand eines von der Steuereinrichtung vorgegebenen Profils festgelegt werden. Diese Profile können beliebig innerhalb eines Rahmens einer sicheren Folienverschweißung verändert, für bestimmte doppelte Folienlagenstärken abgespeichert und aus einem Speicher ausgewählt werden. Ein nach dem Schwebebahnprinzip funktionierender Linearantrieb (Anspruch 8) ist dazu geeignet, dieses Verfahren auszuführen. Dieser wird z. B. an einer vertikalen Schlauchbeutelmaschine dazu genutzt, den Abstand beim Verschweißen zweier Folienlagen mit einer gesamten Stärke, d. h. Dicke beider Folienlagen zusammengenommen, ortsgenau vorzugeben. Dabei ist die Schweißbacke mit einem beweglichen Teil dieses Antriebes verbunden. Der Antrieb weist ein Teil und ein relativ zu diesem Teil bewegliches Teil auf. Das bewegliche Teil kann eine den Abstand verändernde Bewegung ausführen. Dabei wird der jeweilige Wert des Abstandes durch die jeweilige Position des beweglichen Teils relativ zum Teil vorgegeben.

Mit der vorgeschlagenen Neuerung kann die Folie auch vor einer mechanischen Verletzung geschont werden, indem eine Schweißbacke mit einem Abstand zu einer anderen Schweißbacke relativ sanft in einem Aufprallpunkt gegen die Folie gesetzt wird, um einen Schweißvorgang zu beginnen. Um danach eine gute Verschweißung zweier aufeinander liegender Folienschichten zu erreichen, wird sodann, vorzugsweise kunststoffabhängig, der Abstand beibehalten oder etwas verändert. Sodann kann der Abstand erhöht werden, um den aufgeschmolzenen Kunststoff nicht in nachteiliger Weise aus der Schweißnaht zu drücken. Schließlich wird die Siegelkraft auf Null reduziert und die Schweißbacke vom Folienschlauch entfernt.

Vorteilhafte Ausgestaltungen des vorgeschlagenen Verfahrens und der vorgeschlagenen Vorrichtung sind in den Ansprüchen 2 bis 7, sowie 9 und 10 beschrieben.

Ist der Antrieb direkt, vorzugsweise getriebelos mit der Schweißbacke verbunden (Anspruch 9), so ist eine direkte Umsetzung der zeitgenau angesteuerten Ortskoordinaten des Antriebes ohne Getriebe wie Kurbel, Zahnstange oder Riemen und ohne Übersetzung möglich, um jeweils einen exakten Abstand entlang eines ortsgenauen effektiven Siegelweg (kann auch Null sein) und dabei eine bestimmte, vom Antrieb vorgesehene Siegelkraft während der Siegelzeit zu erreichen. Eine lediglich eine Bewegungsrichtung umlenkende und/oder einen Weg verlängernde Mechanik, z. B. Kurvenbahnen zum Umsetzen einer Antriebsbewegung in eine gegenläufige Bewegung zweier Schweißbacken, wird dabei noch als direkt angesehen. Ein geeignetes Kurvengetriebe wird in Anspruch 10 beschrieben. Dabei ist das bewegliche Teil direkt mit einer Kurvenplatte verbunden, welche eine Kurvenlinie oder zwei Kurvenlinien zum Ortsverändern eines mit einem Backenträger einer Schweißbacke verbundenen Nockens aufweist.

Das vorgeschlagene Verfahren kann bei einem taktweisen Folientransport genutzt werden, wenn die Schweißbacke entlang der linienförmigen Bahn bewegt wird, und bei Folienstillstand und am Folienschlauch anliegender Schweißbacke bzw. Schweißbacken während der Siegelzeit Werte für den Abstand von der Steuereinrichtung vorgegeben werden (Anspruch 2), wobei der Antrieb diesen Abstand bzw. diese Abstände umsetzt. Bei einem kontinuierlichen Folientransport, d. h. einen Folientransport ohne Stillstand kann gemäß Anspruch 3 die Scheißbacke entlang einer geschlossenen Bahn bewegt werden, welche einen geraden Abschnitt aufweist, entlang dessen bei bewegtem Folienschlauch die mit ihm mitbewegte Schweißbacke den Folienschlauch verschweißt. Während der Siegelzeit werden Werte für den Abstand von der Steuereinrichtung vorgegeben und vom Antrieb umgesetzt.

Sehr gute Nahtergebnisse werden erzielt, wenn während der Dauer der Siegelzeit der Abstand konstant gehalten wird (Anspruch 4). Diese Ergebnisse können aber noch optimiert werden, wenn gemäß Anspruch 5 der Abstand während der Dauer der Siegelzeit verändert wird. Ist der Schweißvorgang nahezu beendet, so ist es zur weiteren Vermeidung eines Kunststoffwegdrückens bei der dann sehr heißen Schweißnaht von Vorteil, wenn der Abstand erhöht wird, um die restliche Folienverschweißung mit einem erhöhten Abstand vorzunehmen.

Wird gemäß Anspruch 6 bei einem entsprechenden Folientyp vor Beginn des Schweißvorganges ein Abstand vorgegeben, welcher größer oder gleich der Stärke der Summe der Stärke der beiden aufeinander liegenden Folienlagen ist, so können Folienlagen zunächst ohne Ausüben eines Siegeldruckes bzw. irgendeines Druckes von einer Siegelfläche oder zwei Siegelflächen vorgewärmt werden, bevor nachfolgend unter Ausübung der Siegelkraft bei verringertem Abstand der Schweißvorgang ausgeführt wird.

Des weiteren kann die vorgeschlagene Neuerung dazugenutzt werden, selbst kleinste Produkte, die zwischen die Folienlagen geraten sind, und bei deren Einschweißung eine undichte Siegelnaht erzeugt würde, festzustellen. Dies ist möglich, da mittels eines elektromagnetischen Linearantriebes selbst Ortsabweichungen im Bereich von ca. 0,01 mm erzeugt und/oder festgestellt werden können. Bei Folienstärken von 0,03 bis 0,1 mm, also Werten für die doppelte Folienstärke d von 0,06 bis 0,2 mm kann entsprechend ein Produkteinschluss selbst kleinster Produktteile festgestellt werden. Dabei werden gemäß Anspruch 7 vorgegebene Werte für den Abstand mit einer für diese Werte bzw. diesen Wert zu erreichenden Siegelkraft verglichen. Bei zu hoher Siegelkraft für einen bestimmten Abstand wird sodann auf einen Produkteinschluss zwischen dem Widerstand und einer Siegelfläche bzw. zwischen den Siegelflächen geschlossen. Ein akustisches oder ein optisches Signal der Verpackungsmaschine oder ein Auswurf eines erzeugten Beutels mit fehlerhafter Quer- oder Längsnaht sind sich dem Erkennen eines Produkteinschlusses nachfolgend anbietende Alternativen.

Im folgenden werden das vorgeschlagene Verfahren und eine nach dem vorgeschlagenen Verfahren betreibbare vertikale Schlauchbeutelmaschine an Hand von Ausführungsbeispiele darstellenden Figuren näher beschrieben. Es zeigt:
- Figur 1: in einer Seitenansicht eine vertikale Schlauchbeutelmaschine mit gegeneinander bewegbaren Schweißbacken einer Quersiegelstation;
- Figur 2: in einer Ansicht von oben die Quersiegelstation für die Schlauchbeutelmaschine der Figur 1, bei der ein Linearmotor mit einem eine Kurvenplatte aufweisendem, direkt wirkendem Getriebe dazu genutzt wird, die Schweißbacken gegen den Folienschlauch zu bewegen, um diesen quer zu seiner Transportrichtung zu verschweißen;
- Figur 3: in einer schematischen Darstellung den Umlauf der beiden gegeneinander bewegbaren, entlang eines geraden Abschnittes einer jeweils umlaufenden Bahn den Folienschlauch der Figur 1 verschweißenden Schweißbacken, welche während des Schweißvorganges einen Abstand a zueinander haben, welcher von einer Steuereinrichtung dem Linearmotor (elektromagnetischer Linearantrieb) vorgegeben wurde;
- Figur 4: in einer schematischen Darstellung zwei entlang einer linienförmigen Bahn aufeinander zu bewegbare Schweißbacken, welche bei geschlossener Backenstellung einen Abstand a zueinander haben;
- Figur 5: in einer Schnittdarstellung die Verschweißung zweier aneinander liegender, eine insgesamte Stärke d aufweisender Folienlagen, wobei zwischen den Siegelflächen zweier Schweißbacken ein minimaler Abstand a eingestellt wurde, sowie
- Figur 6: in einer Schnittdarstellung den Gegenstand der Figur 5, jedoch mit einem Produkteinschluss zwischen den miteinander zu verschweißenden Folienlagen, wobei der Produkteinschluss aus einer zusätzlichen Siegelkraft erkannt wird, die nötig ist, um von einem Abstand aᵢₛₜ zu einem Abstand aₛₒₗₗ (ohne Produkteinschluss) zu gelangen.

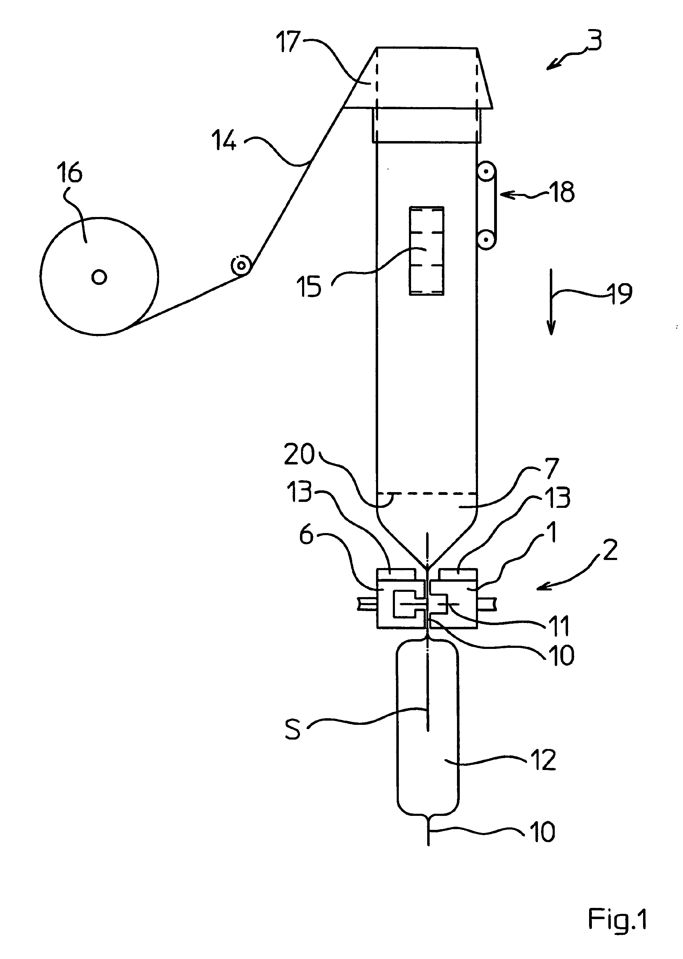

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (Figur 1). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 dienen dazu den Folienschlauch 7 quer zur Transportrichtung 19 mittels Quernähten 10 zu verschweißen. Eine Trenneinrichtung 11 in einer Schweißbacke 1 dient dazu, jeweils einen Schlauchbeutel 12 mit einer bestimmten Beutellänge vom Folienschlauch 7 abzutrennen.

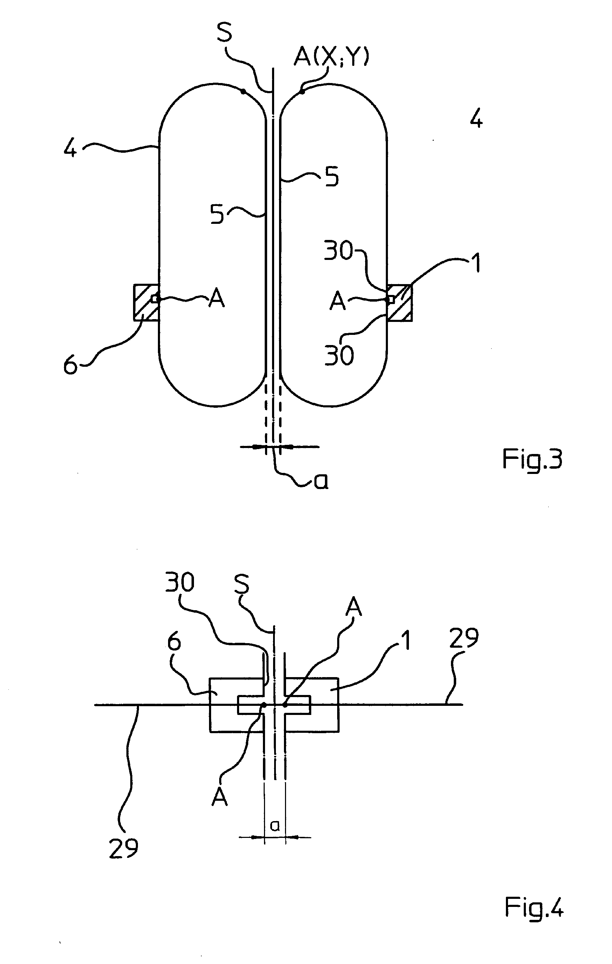

Die Schweißbacken 1, 6 werden derart betrieben, dass sie gegenläufig umlaufen, um längs eines geraden Abschnitts 5 die Verschweißung des mit gleicher Geschwindigkeit wie die Schweißbacken 1, 6 nach unten bewegten Folienschlauch 7 auszuführen (Figur 3). Beide Schweißbacken 1, 6 werden dazu mit einem Bewegungspunkt A entlang einer jeweils geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacken 1, 6 in Richtung des geraden Abschnittes 5 mit konstanter Geschwindigkeit weiterbewegt, um den Folienschlauch 7 durch die Wärmeeinwirkung der Schweißbacken 1, 6 innerhalb einer Siegelzeit zu verschweißen.

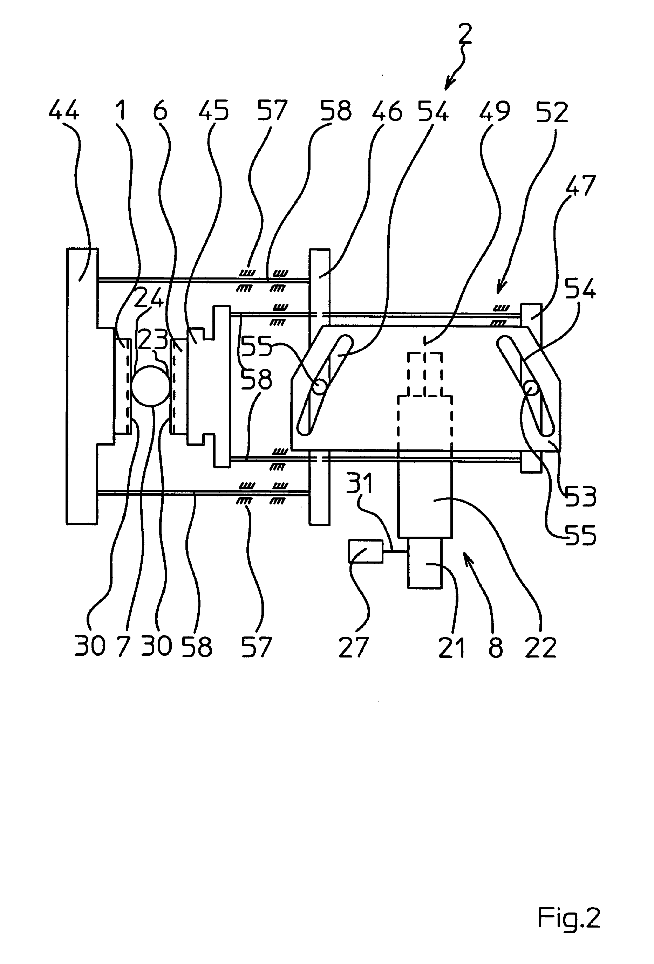

In einem anderen Ausführungsbeispiel (Figur 4) wird ein Folienschlauch in einer Siegelebene S von gegeneinander bewegten Schweißbacken 1, 6 zusammengedrückt und verschweißt. Die Schweißbacken werden nicht in einer y-Richtung bewegt. Ihr Bewegungspunkt A folgt einer linienförmigen Bahn 29. Dies entspricht dem sogenannten getakteten oder diskontinuierlichen Folientransport. Bei dieser Ausführung wird im Gegensatz zu einem Verfahren gemäß Figur 3 kein Antrieb benötigt, um eine Bewegung in γ-Richtung zu überlagern. Ein einziger, in horizontaler x-Richtung wirkender, nach dem Schwebebahnprinzip funktionierender Linearantrieb ist bei beiden Ausführungsbeispielen (Figur 3 und Figur 4) für die Bewegung der Schweißbacken 1, 6 vorgesehen. Die Folienschlauchquerverschweißung erfolgt mittels der beiden den Folienschlauch 7 zwischen sich einklemmenden Schweißbacken 1, 6 (Figur 2). Zwei Backenhalter 44, 45 dienen zum Halten jeweils einer Schweißbacke 1, 6 und jeweils ein Backenträger 46, 47 dient zum Tragen eines Backenhalters 44, 45 und damit der Schweißbacken 1, 6. Die Backenträger 46, 47 sind über jeweils zwei in Führungen 57 geführten starren Verbindungen 58 mit den Backenhaltern 44, 45 verbunden. Dabei stecken zwei Verbindungen 58 in gleitender Weise in zwei Aussparungen des Backenträgers 46. Als Antrieb für die Backenbewegung dient ein Linearantrieb 8 mit einem entlang einer Wirklinie 49 und eines ortsfesten Teils 21 linear beweglichen Teil 22. Das bewegliche Teil 22 ist mit dem Getriebe 52 verbunden. Ebenso ist das Getriebe 52 mit den Backenträgern 46, 47 verbunden, um eine gegenläufige Bewegung der Backenträger 46, 47 und damit der Schweißbacken 1, 6 zu erzeugen, und um die Schweißbacken 1, 6 aufeinander zu und voneinander weg bewegen zu können.

Das Getriebe 52 wirkt ortsgenau und direkt und enthält eine mit dem beweglichen Teil 21 verbundene Kurvenplatte 53. Die Kurvenplatte 53 weist zwei separate, geschlossene Kurvenlinien 54 auf. Jeweils ein mit dem Backenträger 46, 47 verbundener Nocken 55 wird entlang einer Kurvenlinie 54 geführt. Die Nocken 55 sind als Rollen ausgeführt und rollen entlang der Kurvenlinien 54 ab. Die Kurvenlinien 54 sind spiegelsymmetrisch zueinander mit der Wirklinie 49 als Symmetrieachse ausgebildet und führen derart zu einer gleichmäßigen Bewegung der Schweißbacken 1, 6 aufeinander zu bzw. voneinander weg. Dazwischen erfolgt eine Querverschweißung des Folienschlauches 7. Die Kurvenplatte 53 ist austauschbar, so dass bei gleichartigem Betrieb des Linearantriebs 8 eine geänderte Backenbewegung erzielt werden könnte.

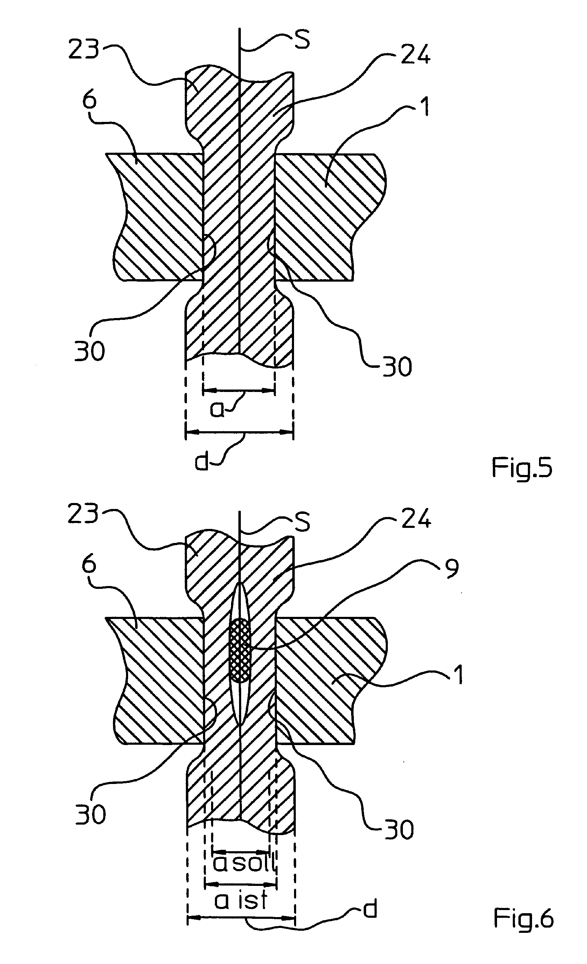

Um den Folienschlauch 7 bei eingebrachter Wärme bei einem ausgeübten Druck in einer Siegelebene S unter einer Siegelkraft innerhalb einer Siegelzeit zu verschweißen, ist der Antrieb 8 dazu vorgesehen, die Schweißbacken 1, 6 jeweils in einer Normalrichtung zu einer Oberfläche der gegenläufigen Schweißbacke 1, 6 hin zu bewegen, um derart den Schweißvorgang ortsfest (Figur 4) oder entlang eines geraden Abschnitts 5 für einen Siegelweg (Figur 3) innerhalb der Siegelzeit durchzuführen. Es wird ein Abstand a zwischen den beiden Siegelflächen 30 der Schweißbacken 1, 6 während des Schweißvorganges von einer Steuereinrichtung 27 des Antriebs 8 vorgegeben. Der Wert für den Abstand a ist stets kleiner als der Wert für die Stärke d für die beiden aufeinander liegenden Folienlagen 23, 24 (Figur 5) um den erhitzten, fließfähigen Kunststoff der erhitzten Folienlagen 23, 24 gegen Ende des Schweißvorganges nicht in erhöhtem Maße aus der Quernaht 10 zu drücken. Der Antrieb 8, welcher ein antreibendes Teil 21 und ein relativ zu diesem bewegliches Teil 22 aufweist, bewegt dazu das bewegliche Teil 22, so in eine bestimmte Position längs des ortsfesten Teils 21, dass der Abstand a eingestellt wird (Figur 3 und Figur 4). Während der gesamten Dauer der Siegelzeit wird der Abstand a vom Antrieb 8 konstant gehalten, wobei eine bestimmte, sich aus dem Abstand a ergebende Siegelkraft vom Antrieb 8 aufgebracht wird. Dabei werden stets die vorgegebenen Werte für den Abstand a mit einer für diesen Wert benötigten Siegelkraft verglichen. Bei zu hoher Siegelkraft für den vorgegebenen Abstand aₛₒₗₗ wird auf einen Produkteinschluss 9 zwischen den Siegelflächen 30 geschlossen (Figur 6).

Beim Ausführungsbeispiel der Figur 6 ist bei einem Abstand aᵢₛₜ bereits die ansonsten erst bei einem Abstand aₛₒₗₗ erreichte Siegelkraft erreicht. Aus dem nunmehr erhöhten Kraftaufwand, welcher an der Leistungsaufnahme des Antriebs 9 gemessen wird, zum Erreichen des Abstandes aₛₒₗₗ wird der Produkteinschluss 9 erkannt.
- A: Bewegungspunkt
- x, y: Bahnkoordinaten
- S: Siegelebene
- a: Abstand der Siegelflächen
- d: Stärke von zwei Folienlagen (Gesamtwert)

- 1: Schweißbacke
- 2: Quersiegelstation
- 3: Schlauchbeutelmaschine
- 4: Bahn, geschlossen
- 5: gerader Abschnitt
- 6: gegenläufige Schweißbacke
- 7: Folienschlauch
- 8: Antrieb
- 9: Produkteinschluss
- 10: Quernaht
- 11: Trenneinrichtung
- 12: Schlauchbeutel
- 14: Folienbahn
- 15: Abzug
- 16: Vorratsrolle
- 17: Formschulter
- 18: Längssiegeleinrichtung
- 19: Transportrichtung
- 20: Füllrohr
- 21: antreibendes Teil
- 22: bewegliches Teil
- 23, 24: Folienlage
- 27: Steuereinrichtung
- 29: Bahn, linienförmig
- 30: Siegelfläche
- 31: Leitung
- 44, 45: Backenhalter
- 46, 47: Backenträger
- 52: Getriebe
- 53: Kurvenplatte
- 54: Kurvenlinie
- 55: Nocken
- 57: Führung
- 58: starre Verbindung

## Patentansprüche

1. Verfahren zum Positionieren einer Schweißbacke (1, 6) während eines Schweißvorganges, insbesondere einer Schweißbacke (1, 6) einer Quersiegelstation (2) einer vertikalen Schlauchbeutelmaschine (3), wobei die Schweißbacke (1, 6) entlang einer geschlossenen Bahn (4) umlaufend oder entlang einer linienförmigen Bahn (29) hin und her bewegt wird, um gegen einen Widerstand, insbesondere eine zweite, gegenläufige Schweißbacke (1, 6) gesetzt zu werden, wobei zwei aufeinander liegende Folienlagen (23, 24), mit einer insgesamten Stärke (d) für beide Folienlagen (23, 24) insgesamt, eines Folieschlauches (7) zwischen dem Widerstand und einer Siegelfläche (30) der Schweißbacke (1, 6), insbesondere zwischen den Siegelflächen (30) von zwei Schweißbacken (1, 6) zusammengedrückt werden, um den Folienschlauch (7) mittels über die Siegelfläche (30) der Schweißbacke (1, 6) bzw. die Siegelflächen (30) der Schweißbacken (1, 6) in den Folienschlauch (7) eingebrachter Wärme bei einem ausgeübten Druck in einer Siegelebene (S) unter einer Siegelkraft innerhalb einer Siegelzeit zu verschweißen, und wobei ein Antrieb (8) dazu vorgesehen ist, die Schweißbacke (1, 6) in einer Normalrichtung zu einer Oberfläche des Widerstandes bzw. einer gegenläufigen Schweißbacke (1, 6) hin zu bewegen, um derart den Schweißvorgang ortsfest oder entlang eines Siegelweges innerhalb der Siegelzeit durchzuführen, **dadurch gekennzeichnet, dass** ein Abstand (a) zwischen der Siegelfläche (30) und dem Widerstand bzw. zwischen den beiden Siegelflächen (30) der Schweißbacken (1, 6) während des Schweißvorganges von einer Steuereinrichtung (27) des Antriebs (8) vorgegeben wird, und dass der Wert für den Abstand (a) stets kleiner oder gleich dem Wert für die Stärke (d) für die beiden aufeinander liegenden Folienlagen (23, 24) ist.

2. Verfahren nach Anspruch 1, **dadurch gekennzeichnet, dass** die Schweißbacke (1, 6) entlang der linienförmigen Bahn (29) bewegt wird, und bei Folienstillstand und am Folienschlauch (7) anliegender Schweißbacke (1, 6) während der Siegelzeit Werte für den Abstand (a) von der Steuereinrichtung (27) vorgegeben werden.

3. Verfahren nach Anspruch 1, **dadurch gekennzeichnet, dass** die Schweißbacke (1, 6) entlang der geschlossenen Bahn (4) bewegt wird, welche einen geraden Abschnitt (5) aufweist, entlang dessen bei bewegtem Folienschlauch (7) die mit ihm mitbewegte Schweißbacke (1, 6) den Folienschlauch (7) verschweißt, wobei während der Siegelzeit Werte für den Abstand (a) von der Steuereinrichtung (27) vorgegeben werden.

4. Verfahren nach Anspruch 1, Anspruch 2 oder Anspruch 3, **dadurch gekennzeichnet, dass** während der Dauer der Siegelzeit der Abstand (a) konstant gehalten wird.

5. Verfahren nach Anspruch 1, Anspruch 2 oder Anspruch 3, **dadurch gekennzeichnet, dass** der Abstand (a) während der Dauer der Siegelzeit verändert wird.

6. Verfahren nach Anspruch 4 oder Anspruch 5, **dadurch gekennzeichnet, dass** vor Beginn des Schweißvorganges ein Abstand (a) vorgegeben wird, welcher größer oder gleich der Stärke (d) der Summe der Stärke der beiden aufeinander liegenden Folienlagen (23, 24) ist, um die Folienlagen (23, 24) zunächst vorzuwärmen, bevor unter Ausübung der Siegelkraft bei verringertem Abstand (a) der Schweißvorgang ausgeführt wird.

7. Verfahren nach einem der Ansprüche 1 bis 6, **dadurch gekennzeichnet, dass** die vorgegebenen Werte für den Abstand (a) mit einer für diese Werte bzw. diesen Wert zu erreichenden Siegelkraft verglichen werden, und dass bei zu hoher Siegelkraft für einen bestimmten Abstand (a) auf einen Produkteinschluss (9) zwischen dem Widerstand und einer Siegelfläche (30) bzw. zwischen den Siegelflächen (30) geschlossen wird.

8. Vorrichtung zum Ausführen des Verfahrens gemäß einem der Ansprüche 1 bis 7, **dadurch gekennzeichnet, dass** die Vorrichtung eine Verpackungsmaschine, insbesondere eine vertikale Schlauchbeutelmaschine (3) ist, welche zum Bewegen der Schweißbacke (1) einen als elektromagnetischen Linearantrieb, der nach dem Schwebebahnprinzip funktioniert, ausgestalteten Antrieb (8) aufweist, welcher ein Teil (21) und ein relativ zu diesem Teil (21) bewegliches Teil (22) aufweist und das bewegliche Teil (22) eine den Abstand (a) verändernde Bewegung ausführen kann, wobei der jeweilige Wert des Abstandes (a) durch die jeweilige Position des beweglichen Teils (22) relativ zum Teil (21) vorgegeben wird.

9. Vorrichtung nach Anspruch 8, **dadurch gekennzeichnet, dass** das bewegliche Teil (22) getriebelos direkt mit der Schweißbacke (1, 6) verbunden ist.

10. Vorrichtung nach Anspruch 8, **dadurch gekennzeichnet, dass** das bewegliche Teil (22) direkt mit einer Kurvenplatte (53) verbunden ist, welche eine Kurvenlinie oder zwei Kurvenlinien (54) zum Ortsverändern eines mit einem Backenträger (46, 47) einer Schweißbacke (1, 6) verbundenen Nockens (55) aufweist.
